# EUROPEAN PATENT APPLICATION

(11) **EP 4 765 931 A1**
(43) Date of publication of application: **24.06.2026**
(21) Application number: 23948799.4
(22) Date of filing: 14.08.2023
(51) Int. Cl.: H04W 24/08

(54) **COMMUNICATION METHOD, ACCESS POINT DEVICE, STATION DEVICE AND COMMUNICATION DEVICE**

(71) Applicant: Beijing Xiaomi Mobile Software Co., Ltd., Beijing 100085 (CN)
(72) Inventor: DONG, Xiandong, Beijing 100085 (CN)
(74) Representative: Stöckeler, Ferdinand
(86) International application number: PCT/CN2023/112947
(87) International publication number: WO 2025/035364

(57) **Abstract**

Embodiments of the present disclosure relate to a communication method, an access point device, a station device and a communication device. The communication method comprises: an access point device determining a fist radio frame, wherein the first radio frame comprises first identification information, the first identification information comprises fist sensing capability information of the access point device, and the first sensing capability information identifies: whether the access point device supports a station device to sense a secondary channel; and sending the first radio frame. Thus, when a primary channel is busy, a WLAN device can perform communication in a secondary channel, thereby improving the throughput of a communication system, and maximizing the utilization of channel resources.

## Description

### TECHNICAL FIELD

The disclosure relates to the field of communication technology, and in particular to a communication method, an access point device, a station device and a communication device.

### BACKGROUND

Currently, content studied by Wi-Fi technology, for example, ultra high reliability (UHR), has a vision of improving reliability of wireless local area network (WLAN) connectivity, reducing latency, improving manageability, increasing throughput under different signal to noise ratio (SNR) levels, and reducing device-level power consumption.

In the UHR, to fully utilize channel resources, a WLAN device is supported to communicate on a secondary channel. Therefore, a mechanism for the WLAN device to communicate on the secondary channel may be further improved, so as to meet the transmission requirements of the UHR.

### SUMMARY

Embodiments of the disclosure provide a communication method, an access point device, a station device and a communication device, to improve the mechanism for a wireless local area network (WLAN) device to communicate on a secondary channel.

In a first aspect, embodiments of the disclosure provide a communication method. The method includes: determining, by an access point device, a first wireless frame, in which the first wireless frame includes first identification information, the first identification information includes first sensing capability information of the access point device; and the first sensing capability information indicates whether the access point device supports a station device in sensing a secondary channel; and sending the first wireless frame.

In another aspect, embodiments of the disclosure further provide a communication method. The method includes: receiving, by an access point device, a second wireless frame, in which the second wireless frame includes second identification information, the second identification information includes second sensing capability information of a station device; and the second sensing capability information includes whether the station device supports sensing a secondary channel.

In another aspect, embodiments of the disclosure further provide a communication method. The method includes: determining, by a station device, a second wireless frame, in which the second wireless frame includes second identification information, the second identification information includes second sensing capability information of the station device; and the second sensing capability information includes whether the station device supports sensing a secondary channel; and sending the second wireless frame.

In another aspect, embodiments of the disclosure further provide a communication method. The method includes: receiving a first wireless frame, in which the first wireless frame includes first identification information, the first identification information includes first sensing capability information of an access point device; and the first sensing capability information indicates whether the access point device supports a station device in sensing a secondary channel.

In another aspect, embodiments of the disclosure further provide an access point device. The access point device includes: a first determining module, configured to determine a first wireless frame, in which the first wireless frame includes first identification information, the first identification information includes first sensing capability information of the access point device; and the first sensing capability information indicates whether the access point device supports a station device in sensing a secondary channel; and a first sending module, configured to send the first wireless frame.

In another aspect, embodiments of the disclosure further provide an access point device. The access point device includes: a first receiving module, configured to receive a second wireless frame, in which the second wireless frame includes second identification information, the second identification information includes second sensing capability information of a station device; and the second sensing capability information includes whether the station device supports sensing a secondary channel.

In another aspect, embodiments of the disclosure further provide a station device. The station device includes: a second determining module, configured to determine a second wireless frame, in which the second wireless frame includes second identification information, the second identification information includes second sensing capability information of the station device; and the second sensing capability information includes whether the station device supports sensing a secondary channel; and a second sending module, configured to send the second wireless frame.

In another aspect, embodiments of the disclosure further provide a station device. The station device includes: a second receiving module, configured to receive a first wireless frame, in which the first wireless frame includes first identification information, the first identification information includes first sensing capability information of an access point device; and the first sensing capability information indicates whether the access point device supports the station device in sensing a secondary channel.

In another aspect, embodiments of the disclosure further provide an access point device. The access point device includes: one or more processors, in which the access point device is configured to execute the communication method in embodiments of the disclosure.

In another aspect, embodiments of the disclosure further provide a station device. The station device includes: one or more processors, in which the station device is configured to execute the communication method in embodiments of the disclosure.

In another aspect, embodiments of the disclosure further provide a communication device. The communication device includes: one or more processors, in which the communication device is configured to execute the communication method in embodiments of the disclosure.

In another aspect, embodiments of the disclosure further provide a communication system. The communication system includes: an access point device and an access point device. The access point device is configured to execute the communication method in embodiments of the disclosure; and the access point device is configured to execute the communication method in embodiments of the disclosure.

Embodiments of the disclosure further provide a storage medium. The storage medium stores instructions which, when run on a communication device, cause the communication device to execute the communication method in embodiments of the disclosure.

In embodiments of the disclosure, the access point device determines the first wireless frame, in which the first wireless frame includes the first identification information, the first identification information includes the first sensing capability information of the access point device; and the first sensing capability information indicates whether the access point device supports the station device in sensing the secondary channel; and sends the first wireless frame. Thus, when a primary channel is busy, a wireless local area network (WLAN) device may perform communication on the secondary channel, improving throughput of the communication system and maximizing utilization of channel resources.

Additional aspects and advantages of the present invention will be set forth in part in the description which follows, and in part will be obvious from the description, or will be learned by practice of the present invention.

### BRIEF DESCRIPTION OF THE DRAWINGS

In order to more clearly illustrate technical solutions in embodiments of the disclosure, the drawings required for describing the embodiments are introduced below. The following drawings are merely some embodiments of the disclosure and do not specifically limit the scope of protection of the disclosure.
FIG. 1 is a schematic diagram illustrating a communication method according to an embodiment of the disclosure.
FIG. 2 is a first schematic diagram illustrating interaction in a method according to an embodiment of the disclosure.
FIG. 3 is a second schematic diagram illustrating interaction of a method according to an embodiment of the disclosure.
FIG. 4 is a first flowchart illustrating a communication method according to an embodiment of the disclosure.
FIG. 5 is a second flowchart illustrating a communication method according to an embodiment of the disclosure.
FIG. 6 is a third flowchart illustrating a communication method according to an embodiment of the disclosure.
FIG. 7 is a fourth flowchart illustrating a communication method according to an embodiment of the disclosure.
FIG. 8 is a first block diagram illustrating an access point device according to an embodiment of the disclosure.
FIG. 9 is a second block diagram illustrating an access point device according to an embodiment of the disclosure.
FIG. 10 is a first block diagram illustrating a station device according to an embodiment of the disclosure.
FIG.11 is a second block diagram illustrating a station device according to an embodiment of the disclosure.
FIG. 12 is a block diagram illustrating a terminal according to an embodiment of the disclosure.
FIG.13 is a block diagram illustrating a chip according to an embodiment of the disclosure.

### DETAILED DESCRIPTION

Embodiments of the disclosure provide a communication method, an access point device, a station device and a communication device.

In a first aspect, embodiments of the disclosure provide a communication method. The method includes: determining, by an access point device, a first wireless frame, in which the first wireless frame includes first identification information, the first identification information includes first sensing capability information of the access point device; and the first sensing capability information indicates whether the access point device supports a station device in sensing a secondary channel; and sending the first wireless frame.

In the above embodiments, when a primary channel is busy, a wireless local area network (WLAN) device may communicate on the secondary channel, thus improving throughput of the communication system and maximizing utilization of channel resources.

In combination with some embodiments of the first aspect, in some embodiments, the first sensing capability information indicates that the access point device supports the station device in sensing the secondary channel; and the first identification information further includes: first sensing period information, in which the first sensing period information includes sensing period information of sensing the secondary channel of the station device supported by the access point device.

In the above embodiments, a sensing period may be 0 milliseconds (ms), 2.7 ms, 4 ms, or other time values. The first sensing capability information further indicates a sensing period of the station device supported by the access point device, or a sensing period finally determined by the access point device. By negotiating the sensing period, the mechanism for the WLAN device to communicate on the secondary channel is further improved, thus improving throughput of the communication system.

In combination with some embodiments of the first aspect, in some embodiments, the first wireless frame includes at least one of a beacon frame, a probe response frame, an association response frame or a newly defined wireless frame; the first sensing period information is carried in the association response frame; and the newly defined wireless frame is a wireless frame sent after initial association.

In the above embodiments, during an initial association process, the access point device and the station device negotiate sensing capability information of the access point device via at least one of the beacon frame, the probe response frame, or the association response frame; the newly defined wireless frame is a wireless frame sent after the initial association. After the initial association, the sensing capability information of the access point device is negotiated via the newly defined wireless frame, thus improving throughput of the communication system.

In combination with some embodiments of the first aspect, in some embodiments, the first sensing period information includes sensing periods of a plurality of secondary channels; and the sensing periods of the plurality of secondary channels are the same, or sensing periods of at least two secondary channels with different bandwidths are different.

In the above embodiments, there may be one or more secondary channels. For example, if divided with 20 MHz as a basic bandwidth unit, when a channel bandwidth is 20 MHz, there is only one primary channel with a bandwidth of 20 MHz; when the channel bandwidth is greater than 20 MHz, the channel includes a channel with a bandwidth of 20 MHz which is a primary channel, and the remaining one or more channels with a bandwidth of 20 MHz which are secondary channels. For different secondary channels, the sensing periods of the secondary channels may be the same. For example, 2.7 ms or 4 ms may be used. Sensing periods of at least two secondary channels with different bandwidths may be different. For example, a sensing period of a 20 MHz secondary channel is 2.7 ms, and a sensing period of a 40 MHz secondary channel is 4 ms. By negotiating the sensing period, the mechanism for the WLAN device to communicate on the secondary channel is further improved, thus improving throughput of the communication system.

In combination with some embodiments of the first aspect, in some embodiments, the first sensing period information includes a bandwidth difference between the secondary channel and a primary channel, and each bandwidth difference corresponds to a preset sensing period.

In the above embodiments, a sensing period of the secondary channel may be determined via a difference between a bandwidth of the secondary channel and a bandwidth of the primary channel. For example, a mapping relationship between a bandwidth difference and a sensing period difference is established. For every 20 MHz difference between the bandwidth of the secondary channel and the bandwidth of the primary channel, a duration of the sensing period increases by 1 ms, or an interval between sensing periods increases by 1 ms. Different sensing periods are set for channels with different bandwidths, thus reducing mutual interference.

In combination with some embodiments of the first aspect, in some embodiments, the first sensing period information includes a sensing period of the secondary channel; and the sensing period is a value configured in basic service set (BSS) loading information of a primary channel.

In the above embodiments, an access point (AP) device and a station (STA) device may adjust their sensing period information to a fixed sensing period based on the BSS loading information in the primary channel. For example, a configured value in the BSS loading information is selected as a sensing period to be finally executed.

In combination with some embodiments of the first aspect, in some embodiments, the first sensing period information includes a sensing period of the secondary channel; and the sensing period of the secondary channel is different from a sensing period of another BSS, and the another BSS is a BSS within the same overlapping BSS (OBSS) as the access point device.

In the above embodiments, a sensing period of a local BSS finally determined by the access point device and the station device is different from sensing periods of other BSSs, thus avoiding interference with the other BSSs. Further, the access point device broadcasts the negotiated sensing period to other WLAN devices within the OBSS, facilitating the other WLAN devices to determine a sensing period of a local BSS based on the received sensing periods of the other BSSs, thus avoiding interference with the other BSSs.

In a second aspect, embodiments of the disclosure provide a communication method. The method includes: receiving, by an access point device, a second wireless frame; in which the second wireless frame includes second identification information, the second identification information includes second sensing capability information of a station device; and the second sensing capability information includes whether the station device supports sensing a secondary channel.

In combination with some embodiments of the second aspect, in some embodiments, the second sensing capability information indicates that the station device supports sensing the secondary channel; and the second identification information further includes: second sensing period information, in which the second sensing period information includes sensing period information of sensing the secondary channel supported by the station device.

In combination with some embodiments of the second aspect, in some embodiments, the second wireless frame includes at least one of a probe request frame, an association request frame, or a newly defined wireless frame; the second sensing period information is carried in the association request frame; and the newly defined wireless frame is a wireless frame sent after initial association.

In combination with some embodiments of the second aspect, in some embodiments, the second sensing period information includes sensing periods of a plurality of the secondary channels; and the sensing periods of the plurality of secondary channels are the same, or sensing periods of at least two secondary channels with different bandwidths are different.

In combination with some embodiments of the second aspect, in some embodiments, the second sensing period information includes a bandwidth difference between the secondary channel and a primary channel, and each bandwidth difference corresponds to a preset sensing period.

In combination with some embodiments of the second aspect, in some embodiments, the second sensing period information includes a sensing period of the secondary channel; and the sensing period is a value configured in BSS loading information of a primary channel.

In combination with some embodiments of the second aspect, in some embodiments, the second sensing period information includes a sensing period of the secondary channel; and the sensing period of the secondary channel is different from a sensing period of another BSS, and the another BSS is a BSSs within the same OBSS as the station device.

In a third aspect, embodiments of the disclosure provide a communication method. The method includes: determining, by a station device, a second wireless frame; in which the second wireless frame includes second identification information, the second identification information includes second sensing capability information of the station device; and the second sensing capability information includes whether the station device supports sensing a secondary channel; and sending the second wireless frame.

In combination with some embodiments of the third aspect, in some embodiments, the second sensing capability information indicates that the station device supports sensing the secondary channel; and the second identification information further includes: second sensing period information, in which the second sensing period information includes sensing period information of sensing the secondary channel supported by the station device.

In combination with some embodiments of the third aspect, in some embodiments, the second wireless frame includes at least one of a probe request frame, an association request frame, or a newly defined wireless frame; the second sensing period information is carried in the association request frame; and the newly defined wireless frame is a wireless frame sent after initial association.

In combination with some embodiments of the third aspect, in some embodiments, the second sensing period information includes sensing periods of a plurality of the secondary channels; and the sensing periods of the plurality of secondary channels are the same, or sensing periods of at least two secondary channels with different bandwidths are different.

In combination with some embodiments of the third aspect, in some embodiments, the second sensing period information includes a bandwidth difference between the secondary channel and a primary channel, and each bandwidth difference corresponds to a preset sensing period.

In combination with some embodiments of the third aspect, in some embodiments, the second sensing period information includes a sensing period of the secondary channel; and the sensing period is a value configured in BSS loading information of a primary channel.

In combination with some embodiments of the third aspect, in some embodiments, the second sensing period information includes a sensing period of the secondary channel; and the sensing period of the secondary channel is different from a sensing period of another BSS, and the another BSS is a BSS within the same OBSS as the station device.

In a fourth aspect, embodiments of the disclosure provide a communication method. The method includes: receiving, by a station device, a first wireless frame; in which the first wireless frame includes first identification information, the first identification information includes first sensing capability information of an access point device; and the first sensing capability information indicates whether the access point device supports the station device in sensing a secondary channel.

In combination with some embodiments of the fourth aspect, in some embodiments, the first sensing capability information indicates that the access point device supports the station device in sensing the secondary channel; and the first identification information further includes: first sensing period information, in which the first sensing period information includes sensing period information of sensing the secondary channel of the station device supported by the access point device.

In combination with some embodiments of the fourth aspect, in some embodiments, the first wireless frame includes at least one of a beacon frame, a probe response frame, an association response frame, or a newly defined wireless frame; the first sensing period information is carried in the association response frame; and the newly defined wireless frame is a wireless frame sent after initial association.

In combination with some embodiments of the fourth aspect, in some embodiments, the first sensing period information includes sensing periods of a plurality of the secondary channels; and the sensing periods of the plurality of secondary channels are the same, or sensing periods of at least two secondary channels with different bandwidths are different.

In combination with some embodiments of the fourth aspect, in some embodiments, the first sensing period information includes a bandwidth difference between the secondary channel and a primary channel, and each bandwidth difference corresponds to a preset sensing period.

In combination with some embodiments of the fourth aspect, in some embodiments, the first sensing period information includes a sensing period of the secondary channel; and the sensing period is a value configured in BSS loading information of a primary channel.

In combination with some embodiments of the fourth aspect, in some embodiments, the first sensing period information includes a sensing period of the secondary channel; and the sensing period of the secondary channel is different from a sensing period of another BSS, and the another BSS is a BSS within the same OBSS as the access point device.

In a fifth aspect, embodiments of the disclosure provide an access point device. The access point device includes at least one of a determining module or a sending module, in which the access point device is configured to perform optional implementations of the first aspect or perform optional implementations of the second aspect.

In a sixth aspect, embodiments of the disclosure provide a station device. The station device includes a first receiving module, in which the station device is configured to perform optional implementations of the third aspect or perform optional implementations of the fourth aspect.

In a seventh aspect, embodiments of the disclosure provide an access point device. The access point device includes: one or more processors, in which the access point device is configured to perform optional implementations of the first aspect or perform optional implementations of the second aspect.

In an eighth aspect, embodiments of the disclosure provide a station device. The station device includes: one or more processors, in which the station device is configured to perform optional implementations of the third aspect or perform optional implementations of the fourth aspect.

In a ninth aspect, embodiments of the disclosure provide a communication system. The communication system includes: an access point device and a station device. The access point device is configured to perform optional implementations of the first aspect or perform optional implementations of the second aspect, and the station device is configured to perform optional implementations of the third aspect or perform optional implementations of the fourth aspect.

In a tenth aspect, embodiments of the disclosure provide a storage medium. The storage medium stores instructions which, when executed on a communication device, cause the communication device to perform the method described in optional implementations of the first aspect, the method described in optional implementations of the second aspect, the method described in optional implementations of the third aspect, or the method described in optional implementations of the fourth aspect.

In an eleventh aspect, embodiments of the disclosure provide a program product. The program product, when executed by a communication device, causes the communication device to perform the method described in optional implementations of the first aspect, the method described in optional implementations of the second aspect, the method described in optional implementations of the third aspect, or the method described in optional implementations of the fourth aspect.

In a twelfth aspect, embodiments of the disclosure provide a computer program. When the computer program is executed on a computer, the computer is caused to perform the method described in optional implementations of the first aspect, the method described in optional implementations of the second aspect, the method described in optional implementations of the third aspect, or the method described in optional implementations of the fourth aspect.

In a thirteenth aspect, embodiments of the disclosure provide a chip or a chip system. The chip or chip system includes a processing circuit, configured to perform the method described in optional implementations of the first aspect, the method described in optional implementations of the second aspect, the method described in optional implementations of the third aspect, or the method described in optional implementations of the fourth aspect.

It may be understood that the access point device, the station device, the communication system, the storage medium, the program product, the computer program and the chip or the chip system are all used to implement the method in embodiments of the disclosure. Thus, regarding beneficial effects they may achieve, reference may made be to the beneficial effects in the corresponding methods, which is not repeated herein.

Embodiments of the disclosure provide a communication method, an access point device, a station device and a communication device. In some embodiments, terms such as "communication method", "method for signal transmission", and "method for wireless frame transmission" may be used interchangeably; and terms such as "system for information processing" "communication system" may be used interchangeably.

Embodiments of the disclosure are not exhaustive, but are only illustrative, and are not intended to be a specific limitation on the protection scope of the disclosure. In the absence of contradiction, each step in a certain embodiment may be implemented as an independent embodiment, and respective steps may be arbitrarily combined. For example, a solution after removing some steps in a certain embodiment may also be implemented as an independent embodiment, and the order of the steps in a certain embodiment may be arbitrarily exchanged. In addition, the optional implementations in a certain embodiment may be arbitrarily combined. In addition, respective embodiments may be arbitrarily combined, for example, some or all steps of different embodiments may be arbitrarily combined, and a certain embodiment may be arbitrarily combined with the optional implementations of other embodiments.

In various embodiments of the disclosure, unless otherwise specified or there is a logical conflict, the terms and/or descriptions between the embodiments are consistent and reference may be made to each other, and the technical features in different embodiments may be combined to form a new embodiment based on their internal logical relationships.

The terms used in embodiments of the disclosure are only for the purpose of describing specific embodiments and are not intended to limit the disclosure.

In embodiments of the disclosure, "a plurality of" refers to two or more.

In some embodiments, the terms "at least one of", "one or more", "a plurality of", "multiple" etc. may be used interchangeably.

In some embodiments, the descriptions such as "at least one of A, B", "A and/or B", "in one case, A, in another case, B", "in response to one case, A, in response to another case, B", etc. may include the following technical solutions according to situations: in some embodiments, A (executing A independently of B); in some embodiments, B (executing B independently of A); in some embodiments, selecting one from A and B for execution (selectively performing A or B); in some embodiments, A and B (executing both A and B). When there are more branches such as A, B, C, etc., the above is applicable.

In some embodiments, the descriptions such as "A or B", etc. may include the following technical solutions according to situations: in some embodiments, A (executing A independently of B); in some embodiments, B (executing B independently of A); in some embodiments, selecting one from A and B for execution (selectively performing A or B). When there are more branches such as A, B, C, etc., the above is applicable.

The prefixes such as "first" and "second" in embodiments of the disclosure are only used to distinguish different described objects, and do not constitute restrictions on the position, order, priority, quantity or content of the described objects. For the statement of the described objects, reference may be made to the description in the context of the claims or embodiments, and it should not constitute redundant restrictions due to the use of prefixes. For example, if the described object is "field", the ordinal number before the "field" in the "first field" and the "second field" does not limit the position or order between the "fields", and the terms "first" and "second" do not limit whether the "fields" they modify are in the same message, nor do they limit the order of the "first field" and the "second field". For another example, if the described object is "level", the ordinal number before the "level" in the "first level" and the "second level" does not limit the priority between the "levels". For another example, a number of described objects is not limited by the ordinal number, and may be one or more. Taking the "first apparatus" as an example, a number of "apparatuses" may be one or more. In addition, the objects modified by different prefixes may be the same or different. For example, if the described object is "an apparatus", then the "first apparatus" and the "second apparatus" may be the same apparatus or different apparatuses, and their types may be the same or different. For another example, if the described object is "information", then the "first information" and the "second information" may be the same information or different information, and their contents may be the same or different.

In some embodiments, "including A", "containing A", "used to indicate A", and "carrying A" may be interpreted as directly carrying A or indirectly indicating A.

In some embodiments, the terms such as "in response to...", "in response to determining...", "in the case of...", "at the time of...", "when...", "if...", "in case that...", etc. may be used interchangeably.

In some embodiments, the terms such as "greater than", "greater than or equal to", "not smaller than", "more than", "more than or equal to", "not less than", "higher than", "higher than or equal to", "not lower than", and "above" may be replaced with each other, and the terms such as "smaller than", "smaller than or equal to", "not greater than", "less than", "less than or equal to", "no more than", "lower than", "lower than or equal to", "not higher than", and "below" may be used interchangeably.

In some embodiments, the apparatus and device, etc. may be interpreted as physical or virtual, and the names are not limited to the names recorded in embodiments. In some cases, the names may also be understood as "equipment", "device", "circuit", "network element", "node", "function", "unit", "section", "system", "network", "chip", "chip system", "entity", and "subject" , and the like.

In some embodiments, the acquisition of data, information, etc. may comply with laws and regulations of the country to which the data is obtained.

In some embodiments, data, information, etc. may be obtained with consent from users.

In addition, each element, each row, or each column in the table of embodiments of the disclosure may be implemented as an independent embodiment, and the combination of any elements, any rows, or any columns may also be implemented as an independent embodiment.

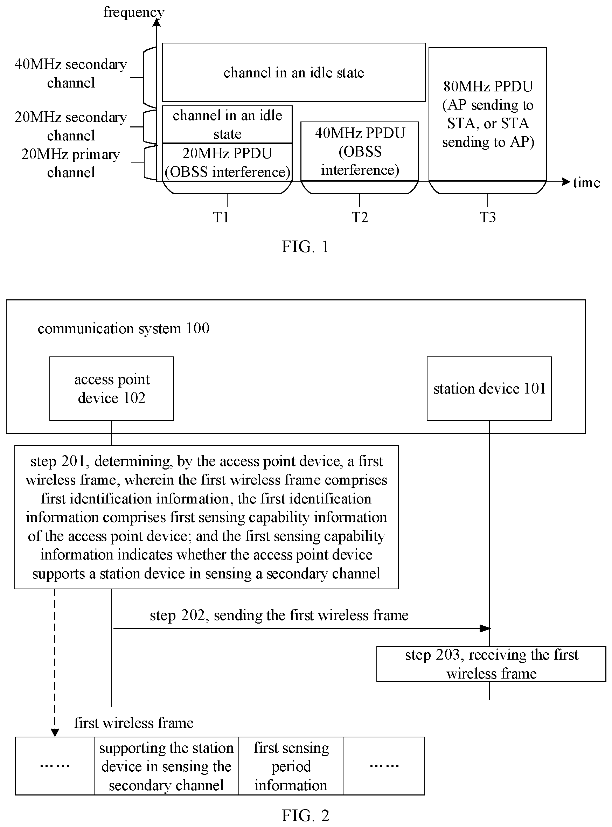

FIG. 1 is a schematic diagram illustrating a communication method according to an embodiment of the disclosure.

As shown in FIG. 1, in a WLAN, channels are usually divided into a primary channel and a secondary channel (or non-primary channel). The primary channel is, for example, the 20 MHz primary channel in FIG. 1, in which the secondary channel may include one or more sub-channels, such as the 20 MHz secondary channel and the 40 MHz secondary channel in FIG. 1.

During a channel contention process on a channel, if the primary channel is in an OBSS busy state (OBSS interference), such as shown by a time period T1 and a time period T2 in FIG. 1, the channel is occupied by other devices in the same OBSS as the WLAN, and the other devices send a physical protocol data unit (PPDU) on the primary channel, then the primary channel is in the OBSS busy state. If the primary channel is in the OBSS busy state, to fully utilize channel resources, it may switch to a secondary channel for communication, thus improving throughput of a communication system and maximizing utilization of channel resources. For example, communication is switched to the 20 MHz secondary channel during time period T1, or switched to the 40 MHz secondary channel during time period T2.

If the primary channel is in an idle state, as shown by a time period T3 in FIG. 1, then the AP and the STA may send PPDUs to each other.

FIG. 2 is a schematic diagram illustrating an architecture of a communication system according to an embodiment of the disclosure.

As shown in FIG. 2, the communication system 100 includes a station device 101 and an access point device 102.

In some embodiments, the station device 101 includes, for example, a wireless communication chip supporting wireless fidelity (Wi-Fi) communication functionality, a wireless sensor, or a wireless communication terminal. Optionally, the wireless communication terminal, for example, may include at least one of a mobile phone, a wearable device, an Internet of Things device supporting Wi-Fi communication functionality, a vehicle equipped with Wi-Fi communication functionality, a smart car, a Pad, a computer with a wireless receiving and sending function, a virtual reality (VR) terminal, an augmented reality (AR) terminal, a wireless terminal in industrial control, a wireless terminal in self-driving, a wireless terminal in remote medical surgery, a wireless terminal in smart grid, a wireless terminal in transportation safety, a wireless terminal in smart city, or a wireless terminal in smart home, but is not limited herein.

Specifically, the station device 101 may be a terminal or a network device with a Wi-Fi chip. Optionally, the station device 101 may support various WLAN standards such as 802.11ax, 802.11be, 802.11ac, 802.11n, 802.11g, 802.11b, 802.11a, 802.11bf, 802.11bn, and may support the next-generation 802.11 protocol, but is not limited herein.

In some embodiments, the access point device 102 may be an access point for a mobile terminal to enter a wired network. The access point device is equivalent to a bridge connecting the wired network and a wireless network. Its main function is to connect various wireless network clients together and then connect the wireless network to an Ethernet network. Specifically, the access point device may be a terminal or a network device with a Wi-Fi chip. Optionally, the access point device may support various WLAN standards such as 802.11ax, 802.11be, 802.11ac, 802.11n, 802.11g, 802.11b, 802.11a, 802.11bf, 802.11bn, and support the next-generation 802.11 protocol, but is not limited herein.

Optionally, in embodiments of the disclosure, the access point device and the station device may be devices supporting multi-link operation. For example, the access point device and the station device may be represented as an access point multi-link device (AP MLD) and a non-access point multi-link device (Non-AP MLD) respectively. The AP MLD may represent an access point supporting multi-link communication functionality, and the non-AP MLD may represent a station supporting multi-link communication functionality.

It may be understood that the communication system described in embodiments of the disclosure aims to clearly illustrate the technical solutions of embodiments of the disclosure, and does not constitute a limitation on the technical solutions provided in embodiments of the disclosure. Those skilled in the art may know that with the evolution of the system architecture and the emergence of new service scenarios, the technical solution provided in embodiments of the disclosure are also applicable to similar technical problems.

The following embodiments of the disclosure may be applied to the communication system 100 or part of the subjects shown in FIG. 2, but are not limited herein. The subjects shown in FIG. 2 are examples, and the communication system may include all or part of the subjects in FIG. 2, or may include subjects other than those shown in FIG. 2. The number and the form of the subjects are arbitrary. The subjects may be physical or virtual. The connection relationships between the subjects are examples. The subjects may be connected or disconnected, and the connection may be in any manner, which may be a direct connection or an indirect connection, or may be a wired connection or a wireless connection.

Embodiments of the disclosure may be applied to a WLAN, such as a local area network using the 802.11 series of protocols. In the WLAN, a BSS is a fundamental component of the WLAN. A BSS network is composed of station devices having a certain association within a specific coverage area. One scenario of association is that stations communicate directly with each other in an ad-hoc network, which is called an independent BSS (IBSS). Another more common scenario is that there is only one central station in a BSS network dedicated to managing the BSS, known as an access point device, and other stations in the network are all associated with the access point device. Other stations in the BSS network that are not the central station are called terminals, also referred to as non-AP STAs. The terminals and the non-AP STAs are collectively referred to as STAs. When describing a STA, there is no need to distinguish between an AP and a non-AP STA. Within the same BSS network, due to reasons such as distance or transmit power, one non-AP STA may be unable to detect other non-AP STA that are relatively far from it, making the station devices as hidden nodes to each other.

As shown in FIG. 2, the method includes the following steps 201 to 203.

At step 201, an access point device 102 determines a first wireless frame, in which the first wireless frame includes first identification information, the first identification information includes first sensing capability information of the access point device; and the first sensing capability information indicates whether the access point device supports a station device in sensing a secondary channel.

In a WLAN, channels are usually divided into a primary channel and a secondary channel (or non-primary channel); in which the secondary channel may include one or more sub-channels. For example, if a channel are divided with 20 MHz as a basic bandwidth unit, when the channel bandwidth is 20 MHz, there is only one primary channel with a bandwidth of 20 MHz; when the channel bandwidth is greater than 20 MHz, the channel includes one channel with a bandwidth of 20 MHz which is a primary channel, and remaining one or more channels with a bandwidth of 20 MHz which are secondary channels. The 20 MHz primary channel is a common channel of operation for stations that are members of the basic service set. Stations in the BSS may contend for the channel on the 20 MHz primary channel to seize channel resources.

During a channel contention process on a channel, if the primary channel is in an OBSS busy state, for example, being occupied by other devices in the same OBSS as the access point device 102, and the other devices send a physical protocol data unit (PPDU) on the primary channel, the primary channel is in the OBSS busy state. If the primary channel is in the OBSS busy state, to fully utilize channel resources, it may switch to communicating with the station device 101 on the secondary channel, schedule the station device 101 to the secondary channel, and perform data transmission and reception with the station device 101, thus improving throughput of a communication system and maximizing utilization of channel resources.

In embodiments of the disclosure, to achieve switching to the secondary channel for communication when the primary channel is busy, the access point device 102 indicates its first sensing capability information in the first wireless frame, and the first sensing capability information indicates whether the access point device 102 supports the station device 101 in sensing the secondary channel.

In some embodiments, the station devices on the network may sense whether other data is being transmitted on the channel before sending data, for example, implemented via a carrier sense mechanism. When about to switch to the secondary channel for communication, the access point device 102 may notify the station device 101, for example, by sending a request to send (RTS) frame or a buffer status report poll (BSRP) control frame to the station device 101. When the access point device 102 sends the RTS frame or the BSRP control frame, the station device 101 may sense the secondary channel to receive the RTS frame or the BSRP control frame. Thus, to achieve switching to the secondary channel for communication when the primary channel is busy, the access point device 102 needs to support the station device 101 in sensing the secondary channel.

The first sensing capability information indicates whether the access point device supports the station device in sensing the secondary channel. For example, a first identification bit is set in the first sensing capability information. If the first identification bit is set to "1", it indicates that the access point device 102 supports the station device 101 in sensing the secondary channel, and communication may be switched to the secondary channel when the primary channel is busy. If the first identification bit is set to "0", it indicates that the access point device 102 does not support the station device 101 in sensing the secondary channel, and communication cannot be switched to the secondary channel when the primary channel is busy.

Optionally, the first wireless frame may be a frame sent during an initial association process between the access point device 102 and the station device 101, such as at least one of a beacon frame, a probe response frame, an association response frame, or a newly defined wireless frame. A new wireless frame may be defined after the initial association to carry the first identification information.

At step 202, the access point device 102 sends the first wireless frame.

The access point device 102 sends the first wireless frame. Thus, when the primary channel is busy, a WLAN device may communicate on the secondary channel. For example, when non-periodic data transmission occurs between the access point device 102 and the station device 101, or when the access point device 102 has downlink data to send to the station device 101, the WLAN device, when sensing that the primary channel is busy, may switch to the secondary channel to send an RTS frame or a BSRP control frame. The station device 101 performs sensing on the secondary channel and replies to the access point device 102 with a clear to send (CTS) frame, enabling the access point device 102 to acknowledge, based on the CTS frame, that the secondary channel is in an idle state and data can be sent, thus achieving communication on the secondary channel, improving throughput of a communication system, and maximizing utilization of channel resources.

At step 203, the station device 101 receives the first wireless frame.

After receiving the first wireless frame, the station device 101 determines, based on the first sensing capability information, whether the access point device 102 supports the station device in sensing the secondary channel. If the access point device 102 supports the station device in sensing the secondary channel (and if the station device 101 also supports sensing the secondary channel), the station device 101 performs sensing on the secondary channel, for example, by performing sensing via a clear channel assessment (CCA) operation, an energy detection (ED) operation, or a network allocation vector (NAV) operation.

In some embodiments, the first sensing capability information indicates that the access point device supports the station device in sensing the secondary channel; and the first identification information further includes: first sensing period information, in which the first sensing period information includes sensing period information of sensing the secondary channel of the station device supported by the access point device.

A sensing period may be 0 ms, 2.7 ms, 4 ms, or other time values. The first sensing capability information further indicates a sensing period of the station device 101 supported by the access point device 102, or a sensing period finally determined by the access point device 102.

In some embodiments, the first wireless frame includes at least one of a beacon frame, a probe response frame, an association response frame, or a newly defined wireless frame. For example, during an initial association process, the access point device 102 and the station device 101 negotiate sensing capability information of the access point device 102 via at least one of the beacon frame, the probe response frame, or the association response frame. The newly defined wireless frame is a wireless frame sent after the initial association. After the initial association, the sensing capability information of the access point device 102 is negotiated via the newly defined wireless frame.

The first sensing period information is carried in the association response frame. For example, the sensing period to be finally executed is determined via the association response frame.

In some embodiments, the first sensing period information includes sensing periods of a plurality of the secondary channels; and the sensing periods of the plurality of secondary channels are the same, or sensing periods of at least two secondary channels with different bandwidths are different.

There may be one or more secondary channels.

For example, if a channel is divided with 20 MHz as a basic bandwidth unit, when a channel bandwidth is 20 MHz, there is only one primary channel with a bandwidth of 20 MHz; when the channel bandwidth is greater than 20 MHz, the channel includes: one channel with a bandwidth of 20 MHz which is a primary channel, and remaining one or more channels with a bandwidth of 20 MHz that are secondary channels. For different secondary channels, the sensing periods of the secondary channels may be the same, for example, 2.7 ms or 4 ms is used, to facilitate unified management of sensing periods for different channels by a WLAN device. Or. sensing periods of at least two secondary channels with different bandwidths may be different. For example, a sensing period of a 20 MHz secondary channel is 2.7 ms, and a sensing period of a 40 MHz secondary channel is 4 ms. Different sensing periods are set for channels with different bandwidths, thus reducing mutual interference.

In some embodiments, the first sensing period information includes a bandwidth difference between the secondary channel and a primary channel, and each bandwidth difference corresponds to a preset sensing period.

A sensing period of the secondary channel may be determined via a difference between a bandwidth of the secondary channel and a bandwidth of the primary channel. For example, a mapping relationship between a bandwidth difference and a sensing period difference is established. For every 20 MHz difference between the bandwidth of the secondary channel and the bandwidth of the primary channel, a duration of the sensing period increases by 1 ms, or an interval between sensing periods increases by 1 ms.

In some embodiments, the first sensing period information includes a sensing period of the secondary channel; and the sensing period is a value configured in BSS loading information of a primary channel.

The access point device and the station device may adjust their sensing period information to a fixed sensing period based on the BSS loading information in the primary channel. For example, the configured value in the BSS loading information is selected as a sensing period to be finally executed.

In some embodiments, the first sensing period information includes a sensing period of the secondary channel; and the sensing period of the secondary channel is different from a sensing period of another BSS, and the another BSS is a BSS within the same OBSS as the access point device.

A sensing period of a local BSS finally determined by the access point device 102 and the station device 101 is different from sensing periods of other BSSs, thus avoiding interference with the other BSSs. Further, the access point device 102 broadcasts its negotiated sensing period to other WLAN devices within the OBSS, facilitating the other WLAN devices to determine the sensing period of the local BSS based on the received sensing periods of the other BSSs, thus avoiding interference with the other BSSs.

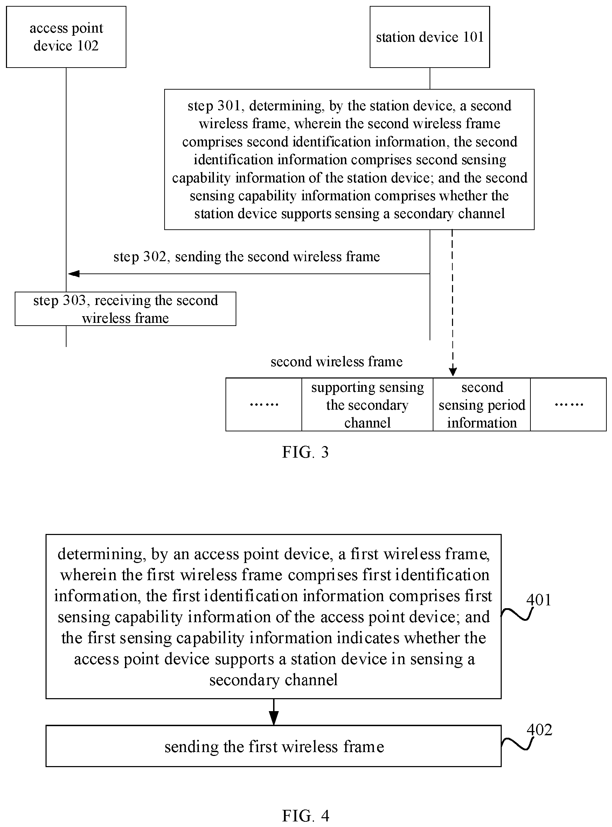

FIG. 3 is a schematic diagram illustrating interaction in a communication method according to an embodiment of the disclosure. As shown in FIG. 3, the method includes the following steps 301 to 303.

At step 301, a station device 101 determines a second wireless frame, in which the second wireless frame includes second identification information, the second identification information includes second sensing capability information of the station device; and the second sensing capability information includes whether the station device supports sensing a secondary channel.

In a WLAN, channels are usually divided into a primary channel and a secondary channel (or non-primary channel); in which the secondary channel may include one or more sub-channels. For example, if a channel is divided with 20 MHz as a basic bandwidth unit, when the channel bandwidth is 20 MHz, there is only one primary channel with a bandwidth of 20 MHz; when the channel bandwidth is greater than 20 MHz, the channel includes one channel with a bandwidth of 20 MHz which is a primary channel, and remaining one or more channels with a bandwidth of 20 MHz which are secondary channels. The primary 20 MHz channel is a common channel of operation for stations that are members of the basic service set. Stations in the BSS may contend for the channel on the primary 20 MHz channel to seize channel resources.

During a channel contention process on a channel, if the primary channel is in an OBSS busy state, for example, being occupied by other devices in the same OBSS as the access point device 102, and the other devices send a PPDU on the primary channel, the primary channel is in the OBSS busy state. If the primary channel is in the OBSS busy state, to fully utilize channel resources, it may switch to communicating with the station device 101 on a secondary channel, schedule the station device 101 to the secondary channel, and perform data transmission and reception with the station device 101, thus improving throughput of a communication system and maximizing utilization of channel resources.

In embodiments of the disclosure, to achieve switching to the secondary channel for communication when the primary channel is busy, the access point device 102 indicates its second sensing capability information in the second wireless frame, and the second sensing capability information indicates whether the station device supports in sensing the secondary channel.

In some embodiments, the station device on the network may sense whether other data is being transmitted on the channel before sending data, for example, implemented via a carrier sense mechanism. When about to switch to the secondary channel for communication, the access point device 102 may notify the station device 101, for example, by sending a request to send (RTS) frame or a buffer status report poll (BSRP) control frame to the station device 101. When the station device 101 sends the RTS frame or the BSRP control frame, the station device 101 may sense the secondary channel to receive the RTS frame or the BSRP control frame. Thus, to achieve switching to the secondary channel for communication when the primary channel is busy, the station device 101 needs to support the station device 101 in sensing the secondary channel.

The second sensing capability information indicates whether the station device supports sensing the secondary channel. For example, a second identification bit is set in the second sensing capability information, if the second identification bit is set to "1", it indicates that the station device 101 supports sensing the secondary channel, and communication may be switched to the secondary channel when the primary channel is busy; if the second identification bit is set to "0", it indicates that station device 101 supports sensing the secondary channel, and communication cannot be switched to the secondary channel when the primary channel is busy.

Optionally, the second wireless frame may be a frame sent during an initial association process between the access point device 102 and the station device 101, such as at least one of a probe request frame, an association request frame, or a newly defined wireless frame. A new wireless frame may be defined after the initial association to carry the second identification information.

At step 302, the station device 101 sends the second wireless frame.

The station device 101 sends the second wireless frame. Thus, when the primary channel is busy, a WLAN device may communicate on the secondary channel. For example, when non-periodic data transmission occurs between the access point device 102 and the station device 101, or when the access point device 102 has downlink data to send to the station device 101, the WLAN device, when sensing that the primary channel is busy, may switch to the secondary channel to send an RTS frame or a BSRP control frame. The station device 101 performs sensing on the secondary channel and replies to the access point device 102 with a CTS frame, enabling the access point device 102 to acknowledge, based on the CTS frame, that the secondary channel is in an idle state and data can be sent, thus achieving communication on the secondary channel, improving throughput of a communication system, and maximizing utilization of channel resources.

At step 303, the access point device 102 receives the second wireless frame.

After receiving the second wireless frame, the access point device 102 determines, based on the second sensing capability information, whether the access point device 102 supports the station device in sensing the secondary channel. If the access point device 102 supports the station device in sensing the secondary channel (and if the station device 101 also supports sensing the secondary channel), the station device 101 performs sensing on the secondary channel, for example, by performing sensing via a CCA operation, an ED operation, or an NAV operation.

In some embodiments, the second sensing capability information indicates that the station device supports sensing the secondary channel; and the second identification information further includes: second sensing period information, in which the second sensing period information includes sensing period information of sensing the secondary channel supported by the station device.

A sensing period may be 0 ms, 2.7 ms, 4 ms, or other time values. The second sensing capability information further indicates a sensing period supported by the station device 101, or a sensing period finally determined.

In some embodiments, the second wireless frame includes at least one of a probe request frame, an association request frame, or a newly defined wireless frame. For example, during an initial association process, the access point device 102 and the station device 101 negotiate sensing capability information of the access point device 102 via at least one of the probe request frame, or the association request frame; the newly defined wireless frame is a wireless frame sent after the initial association. After the initial association, the sensing capability information of the access point device 102 is negotiated via the newly defined wireless frame.

The second sensing period information is carried in the association request frame. For example, the sensing period supported by the station device 101 is determined via the association request frame.

In some embodiments, the second sensing period information includes sensing periods of a plurality of the secondary channels; and the sensing periods of the plurality of secondary channels are the same, or sensing periods of at least two secondary channels with different bandwidths are different.

There may be one or more secondary channels. For example, if a channel is divided with 20 MHz as a basic bandwidth unit, when a channel bandwidth is 20 MHz, there is only one primary channel with a bandwidth of 20 MHz; when the channel bandwidth is greater than 20 MHz, the channel includes: one channel with a bandwidth of 20 MHz which is a primary channel, and remaining one or more channels with a bandwidth of 20 MHz that are secondary channels. For different secondary channels, the sensing periods of the secondary channels may be the same, for example, 2.7 ms or 4 ms is used, facilitating unified management of sensing periods for different channels by a WLAN device; or sensing periods of at least two secondary channels with different bandwidths may be different, for example, a sensing period of a 20 MHz secondary channel is 2.7 ms, and a sensing period of a 40 MHz secondary channel is 4 ms. Different sensing periods are set for channels with different bandwidths, thus reducing mutual interference.

In some embodiments, the second sensing period information includes a bandwidth difference between the secondary channel and a primary channel, and each bandwidth difference corresponds to a preset sensing period.

A sensing period of the secondary channel may be determined via a difference between a bandwidth of the secondary channel and a bandwidth of the primary channel. For example, a mapping relationship between a bandwidth difference and a sensing period difference is established. For every 20 MHz difference between the bandwidth of the secondary channel and the bandwidth of the primary channel, a duration of the sensing period increases by 1 ms, or an interval between sensing periods increases by 1 ms.

In some embodiments, the second sensing period information includes a sensing period of the secondary channel; and the sensing period is a value configured in BSS loading information of a primary channel.

The access point device and the station device may adjust their sensing period information to a fixed sensing period based on the BSS loading information in the primary channel. For example, the configured value in the BSS loading information is selected as a sensing period to be finally executed.

In some embodiments, the second sensing period information includes a sensing period of the secondary channel; and the sensing period of the secondary channel is different from a sensing period of another BSS, and the another BSS is a BSS within the same OBSS as the access point device.

A sensing period of a local BSS finally determined by the access point device 102 and the station device 101 is different from sensing periods of other BSSs, thus avoiding interference with the other BSSs. Further, the station device 101 broadcasts its negotiated sensing period to other WLAN devices within the OBSS, facilitating the other WLAN devices to determine the sensing period of the local BSS based on the received sensing periods of the other BSSs, thus avoiding interference with the other BSSs.

In some embodiments, the names of information or the like are not limited to the names recorded in the embodiments. The terms such as "information", "message", "signal", "signaling", "report", "configuration", "indication", "instruction" "command", "channel", "parameter", "domain", "field", "symbol", "codepoint", "bit", "data", "program", and "chip" may be used interchangeably.

In some embodiments, the terms such as "moment", "time point", "time", and "time position" may be used interchangeably, and the terms such as "duration", "time period", "time window", "window", and "time" may be used interchangeably.

In some embodiments, the terms such as "wireless access scheme" and "waveform" may be used interchangeably.

In some embodiments, the terms such as "certain", "predetermined", "preset", "set", "indicated", "a", "any", "first", or the like may be used interchangeable. "certain A", "predetermined A", "preset A", "set A", "indicated A", "an A", "any A", "first A" may be interpreted as A predefined in a protocol, or as A obtained via setting, configuration, or indication, or as certain A, a A, any A, or first A, etc., but is not limited herein.

In some embodiments, the determination or judgment may be performed by a value represented by 1 bit (0 or 1), or by a true/false value (Boolean value) represented by true or false, or by comparison of numerical values (for example, comparison with a predetermined value), but is not limited herein.

In some embodiments, "not expecting to receive" can be interpreted as not receiving on time domain resources and/or frequency domain resources, or as not performing subsequent processing on the data after receiving the data; "not expecting to send" can be interpreted as not sending, or as sending but not expecting the recipient to respond to the sent content.

The communication method in embodiments of the disclosure may include at least one of the above steps described in the above embodiments. For example, the step S201 may be implemented as an independent embodiment, the step S202 may be implemented as an independent embodiment, the step S204 may be implemented as an independent embodiment, the step S205 may be implemented as an independent embodiment, the step S206 may be implemented as an independent embodiment, the step S201 and the step S202 may be implemented as an independent embodiment, and the step S202 and the step S205 may be implemented as an independent embodiment, which is not limited herein.

In some embodiments, reference may be made to other optional implementations described before or after the description corresponding to FIG. 2.

FIG. 4 is a first flowchart illustrating a communication method according to an embodiment of the disclosure.

As shown in FIG. 4, the method may be applied to an access point device 102. The method includes the following steps S401 to S402.

At step 401, an access point device determines a first wireless frame, in which the first wireless frame includes first identification information, the first identification information includes first sensing capability information of the access point device; and the first sensing capability information indicates whether the access point device supports a station device in sensing a secondary channel.

At step 402, the first wireless frame is sent.

Optionally, in embodiments of the disclosure, the first sensing capability information indicates that the access point device supports the station device in sensing the secondary channel; and the first identification information further includes: first sensing period information, in which the first sensing period information includes sensing period information of sensing the secondary channel of the station device supported by the access point device.

Optionally, in embodiments of the disclosure, the first wireless frame includes at least one of a beacon frame, a probe response frame, an association response frame, or a newly defined wireless frame; the first sensing period information is carried in the association response frame; and the newly defined wireless frame is a wireless frame sent after initial association.

Optionally, in embodiments of the disclosure, the first sensing period information includes sensing periods of a plurality of secondary channels; and the sensing periods of the plurality of secondary channels are the same, or sensing periods of at least two secondary channels with different bandwidths are different.

Optionally, in embodiments of the disclosure, the first sensing period information includes a bandwidth difference between the secondary channel and a primary channel, and each bandwidth difference corresponds to a preset sensing period.

Optionally, in embodiments of the disclosure, the first sensing period information includes a sensing period of the secondary channel; and the sensing period is a value configured in BSS loading information of a primary channel
Optionally, in embodiments of the disclosure, the first sensing period information includes a sensing period of the secondary channel; and the sensing period of the secondary channel is different from a sensing period of another BSS, and the another BSS is a BSS within the same OBSS as the access point device.

The communication method in embodiments of the disclosure may include at least one of the above steps described in the above embodiments. For example, the step S401 may be implemented as an independent embodiment, the step S402 may be implemented as an independent embodiment, and the step S401 and the step S402 may be implemented as an independent embodiment, which is not limited herein.

In some embodiments, reference may be made to other optional implementations described before or after the description corresponding to FIG. 4.

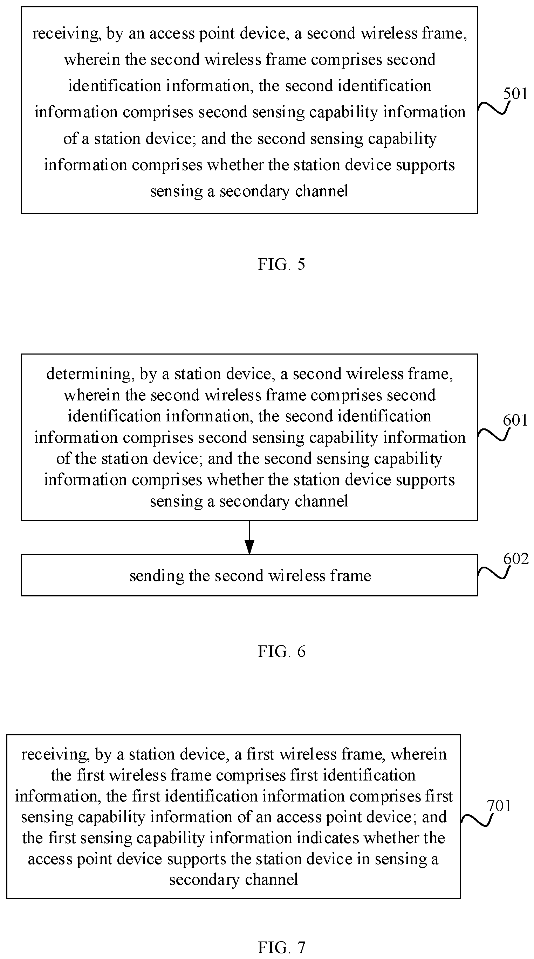

FIG. 5 is a second flowchart illustrating a communication method according to an embodiment of the disclosure.

As shown in FIG. 5, the method may be applied to an access point device 102. The method includes the following step S501.

At step 501, an access point device receives a second wireless frame, in which the second wireless frame includes second identification information, the second identification information includes second sensing capability information of a station device; and the second sensing capability information includes whether the station device supports sensing a secondary channel.

Optionally, in embodiments of the disclosure, the second sensing capability information indicates that the station device supports sensing the secondary channel; and the second identification information further includes: second sensing period information, in which the second sensing period information includes sensing period information of sensing the secondary channel supported by the station device.

Optionally, in embodiments of the disclosure, the second wireless frame includes at least one of a probe request frame, an association request frame, or a newly defined wireless frame; the second sensing period information is carried in the association request frame; and the newly defined wireless frame is a wireless frame sent after initial association.

Optionally, in embodiments of the disclosure, the second sensing period information includes sensing periods of a plurality of the secondary channels; and the sensing periods of the plurality of secondary channels are the same, or sensing periods of at least two secondary channels with different bandwidths are different.

Optionally, in embodiments of the disclosure, the second sensing period information includes a bandwidth difference between the secondary channel and a primary channel, and each bandwidth difference corresponds to a preset sensing period.

Optionally, in embodiments of the disclosure, the second sensing period information includes a sensing period of the secondary channel; and the sensing period is a value configured in BSS loading information of a primary channel.

Optionally, in embodiments of the disclosure, the second sensing period information includes a sensing period of the secondary channel; and the sensing period of the secondary channel is different from a sensing period of another BSS, and the another BSS is a BSS within the same OBSS as the station device.

The communication method in embodiments of the disclosure may include at least one of the above steps described in the above embodiments. For example, the step S501 may be implemented as an independent embodiment, the step S502 may be implemented as an independent embodiment, and the step S501 and the step S502 may be implemented as an independent embodiment, which is not limited herein.

In some embodiments, reference may be made to other optional implementations described before or after the description corresponding to FIG. 5.

FIG. 6 is a third flowchart illustrating a communication method according to an embodiment of the disclosure.

As shown in FIG. 6, the method may be applied to a station device 101. The method includes the following step S601.

At step 601, a station device determines a second wireless frame, in which the second wireless frame includes second identification information, the second identification information includes second sensing capability information of the station device; and the second sensing capability information includes whether the station device supports sensing a secondary channel.

At step 602, the second wireless frame is sent.

Optionally, in embodiments of the disclosure, the second sensing capability information indicates that the station device supports sensing the secondary channel; and the second identification information further includes: second sensing period information, in which the second sensing period information includes sensing period information of sensing the secondary channel supported by the station device.

Optionally, in embodiments of the disclosure, the second wireless frame includes at least one of a probe request frame, an association request frame, or a newly defined wireless frame; the second sensing period information is carried in the association request frame; and the newly defined wireless frame is a wireless frame sent after initial association.

Optionally, in embodiments of the disclosure, the second sensing period information includes sensing periods of a plurality of the secondary channels; and the sensing periods of the plurality of secondary channels are the same, or sensing periods of at least two secondary channels with different bandwidths are different.

Optionally, in embodiments of the disclosure, the second sensing period information includes a bandwidth difference between the secondary channel and a primary channel, and each bandwidth difference corresponds to a preset sensing period.

Optionally, in embodiments of the disclosure, the second sensing period information includes a sensing period of the secondary channel; and the sensing period is a value configured in BSS loading information of a primary channel.

Optionally, in embodiments of the disclosure, the second sensing period information includes a sensing period of the secondary channel; and the sensing period of the secondary channel is different from a sensing period of another BSS, and the another BSS is a BSS within the same OBSS as the station device.

The communication method in embodiments of the disclosure may include at least one of the above steps described in the above embodiments. For example, the step S601 may be implemented as an independent embodiment, the step S602 may be implemented as an independent embodiment, and the step S601 and the step S602 may be implemented as an independent embodiment, which is not limited herein.

In some embodiments, reference may be made to other optional implementations described before or after the description corresponding to FIG. 6.

FIG. 7 is a second flowchart illustrating a communication method according to an embodiment of the disclosure.

As shown in FIG. 7, the method may be applied to a station device 101. The method includes the following step S701.

At step 701, a station device receives a first wireless frame, in which the first wireless frame includes first identification information, the first identification information includes first sensing capability information of an access point device; and the first sensing capability information indicates whether the access point device supports the station device in sensing a secondary channel.

Optionally, in embodiments of the disclosure, the first sensing capability information indicates that the access point device supports the station device in sensing the secondary channel; and the first identification information further includes: first sensing period information, in which the first sensing period information includes sensing period information of sensing the secondary channel of the station device supported by the access point device.

Optionally, in embodiments of the disclosure, the first wireless frame includes at least one of a beacon frame, a probe response frame, an association response frame, or a newly defined wireless frame; the first sensing period information is carried in the association response frame; and the newly defined wireless frame is a wireless frame sent after initial association.

Optionally, in embodiments of the disclosure, the first sensing period information includes sensing periods of a plurality of the secondary channels; and the sensing periods of the plurality of secondary channels are the same, or sensing periods of at least two secondary channels with different bandwidths are different.

Optionally, in embodiments of the disclosure, the first sensing period information includes a bandwidth difference between the secondary channel and a primary channel, and each bandwidth difference corresponds to a preset sensing period.

Optionally, in embodiments of the disclosure, the first sensing period information includes a sensing period of the secondary channel; and the sensing period is a value configured in BSS loading information of a primary channel.

Optionally, in embodiments of the disclosure, the first sensing period information includes a sensing period of the secondary channel; and the sensing period of the secondary channel is different from a sensing period of another BSS, and the another BSS is a BSS within the same OBSS as the access point device.

The communication method in embodiments of the disclosure may include at least one of the above steps described in the above embodiments. For example, the step S701 may be implemented as an independent embodiment, the step S702 may be implemented as an independent embodiment, and the step S701 and the step S702 may be implemented as an independent embodiment, which is not limited herein.

In some embodiments, reference may be made to other optional implementations described before or after the description corresponding to FIG. 7.

Embodiments of the disclosure also provide an apparatus for implementing any one of the above methods. For example, an apparatus is provided, including units or modules for performing the steps executed by the terminal in any one of the above methods. Furthermore, another apparatus is provided, including units or modules for performing the steps executed by the network device (e.g., an access network device, a core network node, a core network device, etc.) in any one of the above methods.

It should be understood that a division of units or modules in the above apparatus is only a division of logical functions. In actual implementations, they may be fully or partially integrated into one physical entity, or may be physically separated. In addition, the units or the modules in the apparatus may be implemented in the form of software called by the processor. For example, the apparatus includes a processor, in which the processor is connected to a memory storing instructions. The processor calls the instructions stored in the memory to implement any one of the above methods or to implement functions of the units or the modules of the above apparatus. The processor is, for example, a general-purpose processor, such as a central processing unit (CPU) or a microprocessor, and the memory is a memory inside the apparatus or a memory outside the apparatus. Or, the units or the modules in the apparatus may be implemented in the form of a hardware circuit. The functions of some or all units or modules may be implemented by designing the hardware circuit. The hardware circuit may be understood as one or more processors. For example, in an implementation, the hardware circuit is an application specific integrated circuit (ASIC). The functions of some or all units or modules are implemented by designing logical relationships of components within the circuit. In another implementation, the hardware circuit may be implemented by a programmable logic device (PLD). Taking a field-programmable gate array (FPGA) as an example, it may include a large number of logic gate circuits. The connection relationships between the logic gate circuits are configured via profiles to implement the functions of some or all units or modules. All units or modules of the above apparatus may be fully implemented in the form of software called by the processor, or fully implemented in the form of the hardware circuit, or partially implemented in the form of software called by the processor and partially implemented in the form of the hardware circuit.

In embodiments of the disclosure, the processor is a circuit with a signal processing capability. In an implementation, the processor may be a circuit with a capability to read and run instructions, such as a CPU, a microprocessor, a graphics processing unit (GPU) (which may be understood as a type of the microprocessor), a digital signal processor (DSP), etc. In another implementation, the processor may implement some functions via a logical relationship of hardware circuits. The logical relationship of the hardware circuit may be fixed or reconfigurable, for example, a hardware circuit implemented by the ASIC or the PLD, such as the FPGA. In the reconfigurable hardware circuit, a process that the processor loads the profiles to implement a hardware circuit configuration may be understood as a process that the processor loads the instructions to implement the functions of some or all of the units or modules. Furthermore, it may also be a hardware circuit designed for artificial intelligence, which may be understood as a type of ASIC, such as a neural network processing unit (NPU), a tensor processing unit (TPU), a deep learning processing unit (DPU), etc.

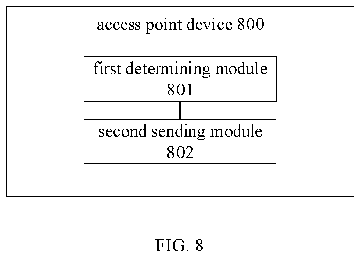

FIG. 8 is a block diagram illustrating an access point device according to an embodiment of the disclosure. As shown in FIG. 8, an access point device 800 may include at least one of a first determining module 801 or a first sending module 802.

In some embodiments, the first determining module 801 is configured to determine a first wireless frame, in which the first wireless frame includes first identification information, the first identification information includes first sensing capability information of the access point device; and the first sensing capability information indicates whether the access point device supports a station device in sensing a secondary channel.

Optionally, the first determining module 801 is configured to perform at least one of the communication steps (e.g., step 201, step 401) performed by the access point device 102 in any of the above methods, and the first sending module 802 is configured to perform step 202, step 402, which is not repeated herein.

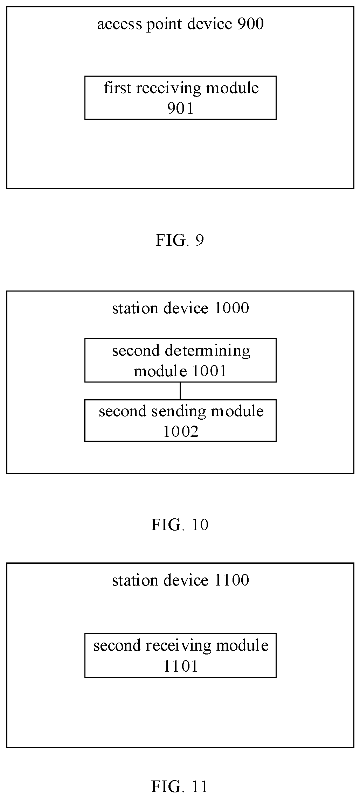

FIG. 9 is a block diagram illustrating an access point device according to an embodiment of the disclosure. As shown in FIG. 9, an access point device 900 may include: a first receiving module 901.

In some embodiments, the first receiving module 901 is configured to receive a second wireless frame, in which the second wireless frame includes second identification information, the second identification information includes second sensing capability information of a station device; and the second sensing capability information includes whether the station device supports sensing a secondary channel.

Optionally, the first receiving module 901 is configured to perform at least one of the communication steps (e.g., step 303, step 501 but not limited herein) performed by the access point device 102 in any of the above methods, which is not repeated herein.

FIG. 10 is a block diagram illustrating a station device according to an embodiment of the disclosure. As shown in FIG. 10, a station device 1000 may include: a second determining module 1001, and a second sending module 1002.

In some embodiments, the second determining module 1001 is configured to determine a second wireless frame, in which the second wireless frame includes second identification information, the second identification information includes second sensing capability information of the station device; and the second sensing capability information includes whether the station device supports sensing a secondary channel.

The second sending module 1002 is configured to send the second wireless frame.

Optionally, the second determining module 1001 is configured to perform at least one of the communication steps (e.g., step 301, step 601, but not limited herein) performed by the station device 101 in any of the above methods, and the second sending module 1002 performs step 302, step 602, which is not repeated herein.

FIG. 11 is a block diagram illustrating a station device according to an embodiment of the disclosure. As shown in FIG. 11, a station device 1100 may include: a second receiving module 1101.

In some embodiments, the second receiving module 1101 is configured to receive a first wireless frame, in which the first wireless frame includes first identification information, the first identification information includes first sensing capability information of an access point device; and the first sensing capability information indicates whether the access point device supports the station device in sensing a secondary channel.

Optionally, the second receiving module 1101 is configured to perform at least one of the communication steps (e.g., step 203, step 701 but not limited herein) performed by the access point device 102 in any of the above methods, which is not repeated herein.

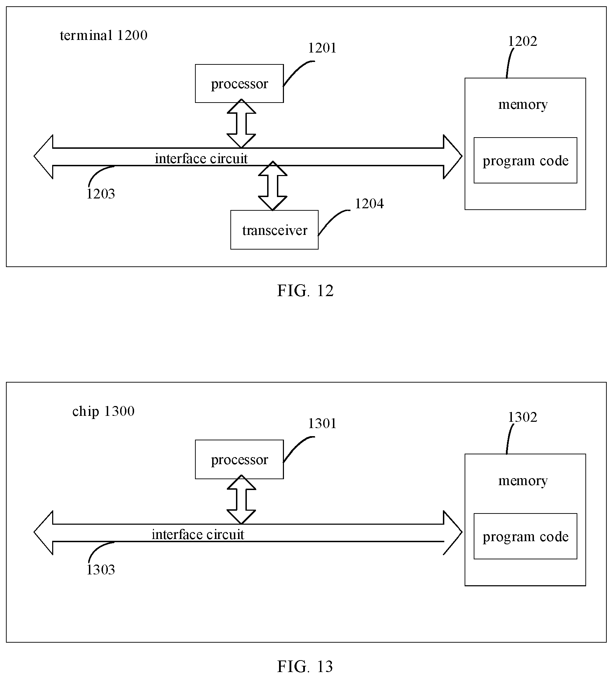

FIG. 12 is a block diagram illustrating a terminal (such as a UE, etc.) 1200 according to an embodiment of the disclosure. The terminal 1200 may be a chip, a chip system, a processor, etc. that supports the network device to implement any one of the methods, or a chip, a chip system, a processor, etc. that supports the terminal to implement any one of the methods. The terminal 1200 may be configured to implement the method in the above method embodiments. For details, reference may be made to the description in the above method embodiments.

As shown in FIG. 12, the terminal 1200 may include one or more processors 1201. The processor 1201 may be a general purpose processor or a dedicated purpose processor, for example, a baseband processor or a central processing unit. The baseband processor may be used to process communication protocols and communication data, and the central processing unit may be used to control communication apparatuses (such as a base station, a baseband chip, a terminal, a terminal chip, a DU or a CU, etc.), execute programs, and process program data. The terminal 1200 is configured to execute any one of the above methods.

Optionally, the terminal 1200 further includes one or more memories 1202 for storing instructions. Optionally, all or some of the memories 1202 may also be located outside the terminal 1200.

In some embodiments, the terminal 1200 further includes one or more transceivers 1204. When the terminal 1200 includes one or more transceivers 1204, the transceiver 1204 performs at least one of the communication steps (e.g., S202, S203, S302, S303, S402, S501, S602, S701, but is not limited herein) such as sending and/or receiving in the above method, and the processor 1201 performs at least one of other steps (e.g., S201, S301, S401, S501, S601, S701, but is not limited herein).

In some embodiments, the transceiver may include a receiver and a transmitter, which may be separate or integrated together. Optionally, the terms such as transceiver, transceiver unit, transceiver machine, transceiving circuit, etc. may be used interchangeably; the terms such as transmitter, transmission unit, transmitting machine, transmitting circuit, etc. may be used interchangeably; and the terms such as receiver, reception unit, receiving machine, receiving circuit, etc. may be used interchangeably.

In some embodiments, the terminal 1200 further includes one or more interface circuits 1203. Optionally, the interface circuit 1203 is connected to the memory 1202. The interface circuit 1203 may be configured to receive signals from the memory 1202 or other devices, and may be configured to send signals to the memory 1202 or other devices. For example, the interface circuit 1203 may read instructions stored in the memory 1202 and send the instructions to the processor 1201.

The terminal 1200 in the above embodiments may be a communication device such as a user equipment, but a scope of the terminal 1200 in the disclosure is not limited to this, and a structure of the terminal 1200 may not be limited by FIG. 12. The communication device may be an independent device or a part of a larger device. For example, the communication device may be: 1) an independent IC, or a chip, or a chip system or a subsystem; 2) a collection including one or more IC, optionally, the IC collection may also include storage components for storing data and computer programs; 3) an ASIC, such as a modem; 4) modules embedded in other devices; 5) a receiver, a terminal, an intelligent terminal, a cellular phone, a wireless device, a handheld phone, a mobile unit, a vehicle-mounted device, a network device, a cloud device, an artificial intelligence device, etc.; 6) others.

FIG. 13 is a block diagram illustrating a chip 1300 according to an embodiment of the disclosure. For a case where the terminal 1200 may be a chip or a chip system, reference may be made to the block diagram of the chip 1300 shown in FIG. 13, but not limited to this.

The chip 1300 includes one or more processors 1301. The chip 1300 is configured to execute any one of the above methods.

In some embodiments, the chip 1300 further includes one or more interface circuits 1303. The interface circuit 1303 is connected to a memory 1302. The interface circuit 1303 may be configured to receive signals from the memory 1302 or other devices, and may be configured to send signals to the memory 1302 or other devices. For example, the interface circuit 1303 may read the instructions stored in the memory 1302 and send the instructions to the processor 1301.

In some embodiments, the interface circuit 1303 performs at least one of the communication steps such as sending and/or receiving in the above method (e.g., S202, S203, S302, S303, S402, S501, S602, S701, but is not limited herein), and the processor 1301 performs at least one of other steps (e.g., S201, S301, S401, S501, S601, S701, but is not limited herein).

In some embodiments, terms such as interface circuit, interface, transceiver pin, transceiver, etc. may be used interchangeably.

In some embodiments, the chip 1300 further includes one or more memories 1302 for storing instructions. Optionally, all or some of the memories 1302 may be located outside the chip 1300.

The disclosure also provides a storage medium for storing instructions. When the instructions are running on the terminal 1200, the terminal 1200 is caused to implement any one of the above methods. Optionally, the above storage medium is an electronic storage medium. Optionally, the above storage medium is a computer-readable storage medium, which is not limited to this, and the above storage medium may also be a storage medium readable by other devices. Optionally, the above storage medium may be a non-transitory storage medium, which is not limited to this, and the above storage medium may also be a transitory storage medium.

The disclosure also provides a program product. When the program product is executed by the terminal 1200, the terminal 1200 is caused to implement any one of the above methods. Optionally, the above program product is a computer program product.

The disclosure also provides a computer program. When the computer program is running on a computer, the computer is caused to implement any one of the above methods.

## Claims

1. A communication method, comprising:
determining, by an access point device, a first wireless frame, wherein the first wireless frame comprises first identification information, the first identification information comprises first sensing capability information of the access point device; and the first sensing capability information indicates whether the access point device supports a station device in sensing a secondary channel; and
sending the first wireless frame.

2. The method according to claim 1, wherein the first sensing capability information indicates that the access point device supports the station device in sensing the secondary channel; and
the first identification information further comprises: first sensing period information, wherein the first sensing period information comprises sensing period information of sensing the secondary channel of the station device supported by the access point device.

3. The method according to claim 2, wherein the first wireless frame comprises at least one of a beacon frame, a probe response frame, an association response frame, or a newly defined wireless frame;
the first sensing period information is carried in the association response frame; and
the newly defined wireless frame is a wireless frame sent after initial association.

4. The method according to claim 2 or 3, wherein the first sensing period information comprises a bandwidth difference between the secondary channel and a primary channel, and each bandwidth difference corresponds to a preset sensing period.

5. The method according to claim 2 or 3, wherein the first sensing period information comprises a sensing period of the secondary channel;
the sensing period is a value configured in basic service set (BSS) loading information of a primary channel; or
the sensing period of the secondary channel is different from a sensing period of another BSS, and the another BSS is a BSS within the same overlapping BSS (OBSS) as the access point device.

6. A communication method, comprising:
receiving, by an access point device, a second wireless frame, wherein the second wireless frame comprises second identification information, the second identification information comprises second sensing capability information of a station device; and
the second sensing capability information comprises whether the station device supports sensing a secondary channel.

7. The method according to claim 6, wherein the second sensing capability information indicates that the station device supports sensing the secondary channel; and
the second identification information further comprises: second sensing period information, wherein the second sensing period information comprises sensing period information of sensing the secondary channel supported by the station device.

8. The method according to claim 7, wherein the second wireless frame comprises at least one of a probe request frame, an association request frame, or a newly defined wireless frame;
the second sensing period information is carried in the association request frame; and
the newly defined wireless frame is a wireless frame sent after initial association.

9. The method according to claim 7 or 8, wherein the second sensing period information comprises a bandwidth difference between the secondary channel and a primary channel, and each bandwidth difference corresponds to a preset sensing period.

10. The method according to claim 7 or 8, wherein the second sensing period information comprises a sensing period of the secondary channel;
the sensing period is a value configured in basic service set (BSS) loading information of a primary channel; or
the sensing period of the secondary channel is different from a sensing period of another BSS, and the another BSS is a BSS within the same overlapping BSS (OBSS) as the station device.

11. A communication method, comprising:
determining, by a station device, a second wireless frame, wherein the second wireless frame comprises second identification information, the second identification information comprises second sensing capability information of the station device; and the second sensing capability information comprises whether the station device supports sensing a secondary channel; and
sending the second wireless frame.

12. The method according to claim 11, wherein the second sensing capability information indicates that the station device supports sensing the secondary channel; and
the second identification information further comprises: second sensing period information, wherein the second sensing period information comprises sensing period information of sensing the secondary channel supported by the station device.

13. The method according to claim 12, wherein the second wireless frame comprises at least one of a probe request frame, an association request frame, or a newly defined wireless frame;
the second sensing period information is carried in the association request frame; and
the newly defined wireless frame is a wireless frame sent after initial association.

14. The method according to claim 12 or 13, wherein the second sensing period information comprises a bandwidth difference between the secondary channel and a primary channel, and each bandwidth difference corresponds to a preset sensing period.

15. The method according to claim 12 or 13, wherein the second sensing period information comprises a sensing period of the secondary channel;
the sensing period is a value configured in basic service set (BSS) loading information of a primary channel; or
the sensing period of the secondary channel is different from a sensing period of another BSS, and the another BSS is a BSS within the same overlapping BSS (OBSS) as the station device.

16. A communication method, comprising:
receiving, by a station device, a first wireless frame, wherein the first wireless frame comprises first identification information, the first identification information comprises first sensing capability information of an access point device; and the first sensing capability information indicates whether the access point device supports the station device in sensing a secondary channel.

17. The method according to claim 16, wherein the first sensing capability information indicates that the access point device supports the station device in sensing the secondary channel; and
the first identification information further comprises: first sensing period information, wherein the first sensing period information comprises sensing period information of sensing the secondary channel of the station device supported by the access point device.

18. The method according to claim 17, wherein the first wireless frame comprises at least one of a beacon frame, a probe response frame, an association response frame, or a newly defined wireless frame;
the first sensing period information is carried in the association response frame; and
the newly defined wireless frame is a wireless frame sent after initial association.

19. The method according to claim 17 or 18, wherein the first sensing period information comprises a bandwidth difference between the secondary channel and a primary channel, and each bandwidth difference corresponds to a preset sensing period.

20. The method according to claim 17 or 18, wherein the first sensing period information comprises a sensing period of the secondary channel;
the sensing period is a value configured in basic service set (BSS) loading information of a primary channel; or
the sensing period of the secondary channel is different from a sensing period of another BSS, and the another BSS is a BSS within the same overlapping BSS (OBSS) as the access point device.

21. An access point device, comprising:
a first determining module, configured to determine a first wireless frame, wherein the first wireless frame comprises first identification information, the first identification information comprises first sensing capability information of the access point device; and the first sensing capability information indicates whether the access point device supports a station device in sensing a secondary channel; and
a first sending module, configured to send the first wireless frame.

22. An access point device, comprising:
a first receiving module, configured to receive a second wireless frame, wherein the second wireless frame comprises second identification information, the second identification information comprises second sensing capability information of a station device; and
the second sensing capability information comprises whether the station device supports sensing a secondary channel.

23. A station device, comprising:
a second determining module, configured to determine a second wireless frame, wherein the second wireless frame comprises second identification information, the second identification information comprises second sensing capability information of the station device; and the second sensing capability information comprises whether the station device supports sensing a secondary channel; and
a second sending module, configured to send the second wireless frame.

24. A station device, comprising:
a second receiving module, configured to receive a first wireless frame, wherein the first wireless frame comprises first identification information, the first identification information comprises first sensing capability information of an access point device; and the first sensing capability information indicates whether the access point device supports the station device in sensing a secondary channel.

25. A communication device, comprising:
one or more processors,
wherein the communication device is configured to execute the communication method according to any one of claims 1 to 10 or any one of claims 11 to 20.
